# EUROPÄISCHE PATENTANMELDUNG

(11) **EP 3 255 424 A1**
(43) Veröffentlichungstag der Anmeldung: **13.12.2017**
(21) Anmeldenummer: 16173062.7
(22) Anmeldetag: 06.06.2016
(51) Int. Cl.: G01N 29/04, G01N 29/22, G01N 29/265, G01N 29/27, G01N 29/28, G01N 29/34

(54) **LUFTGEKOPPELTE ULTRASCHALLUNTERSUCHUNG VON KUNSTSTOFFROHREN**

(71) Anmelder: Georg Fischer Rohrleitungssysteme AG, 8201 Schaffhausen (CH); EMPA, 8600 Dübendorf (CH)
(72) Erfinder: Römmeler, Arno, 8008 Zürich (CH); Sennhauser, Urs, 8706 Meilen (CH); Furrer, Roman, 8620 Wetzikon (CH); Neuenschwander, Jürg, 8624 Grüt (Gossau ZH) (CH); De Agostini, Antonio, 3013 Bern (CH)
(74) Vertreter: Fenner, Seraina

(57) **Zusammenfassung**

Vorrichtung und Verfahren zur zerstörungsfreien Prüfung eines Kunststoffrohres vorzugsweise einer Schweissnaht eines Kunststoffrohres beinhaltet einen Sender zur Erzeugung von Ultraschallwellen, einen Empfänger zum Empfangen der Ultraschallwellen, einen Vorverstärker, einen Verstärker und einen Bandpass-Filter zur Signalaufbereitung, einen Analog-Digital Wandler zur Signaldigitalisierung, und ein Lagerungselement zur Lagerung und Positionierung des zu prüfenden Kunststoffrohres bzw. Schweissnaht, wobei als Koppelmedium zwischen Sender und zu prüfendem Werkstück und Empfänger Luft dient, wobei die Kunststoffrohraussenmantelfläche bzw. das Kunststoffrohr und Sender und Empfänger zueinander rotierbar bzw. drehbar angeordnet sind.

## Beschreibung

Die Erfindung betrifft eine Vorrichtung und ein Verfahren zur zerstörungsfreien Prüfung eines Kunststoffrohres, vorzugsweise eine Schweissnaht eines Kunststoffrohres beinhaltend einen Sender zur Erzeugung von Ultraschallwellen, einen Empfänger zum Empfangen der Ultraschallwellen, einen Vorverstärker, einen Verstärker und einen Bandpass-Filter zur Signalaufbereitung, einen Analog-Digital Wandler zur Signaldigitalisierung und ein Lagerungselement zur Lagerung und Positionierung des zu prüfenden Kunststoffrohres bzw. der zu prüfenden Schweissnaht, wobei als Koppelmedium zwischen Sender und zu prüfendem Werkstück und Empfänger Luft dient.

Die zerstörungsfreie Untersuchung von Prüfobjekten mittels Ultraschall ist Stand der Technik und wird in vielen Bereichen wie z. B. im Flugzeugbau eingesetzt.
Dieses Verfahren wird hauptsächlich bei metallischen Werkstoffen angewandt da diese eine gute Schallleitfähigkeit aufweisen.
Die Ultraschallprüfung soll dem Auffinden von inneren und äusseren Fehlern dienen, die ohne eine Zerstörung des Prüfobjekts nicht erkennbar wären.

Die US 5 824 908 offenbart ein solches Prüfverfahren, das Fehler in Materialen aufgrund von Ultraschallwellen erkennen lässt.
Nachteilig an dem offenbarten Verfahren ist jedoch, dass das System nur auf Platten und nur für Materialien, die eine gewisse Homogenität ohne strukturelle Veränderung des Materials aufweisen, anwendbar ist.

Es ist Aufgabe der Erfindung eine Vorrichtung und ein damit verbundenes Verfahren vorzuschlagen, welches die Erkennung von Fehlern in Kunststoffrohren sowie in den Schweissnähten der Kunststoffrohre ermöglicht. Zudem soll die Erkennung von Fehlern in Kunststoffrohren, insbesondere aus PP und PVDF, die eine hohe akustische Dämpfung aufweisen, ermöglicht werden, indem Signalstörungen und Signalüberlagerungen möglichst vermieden werden.

Diese Aufgabe wird erfindungsgemäss dadurch gelöst, dass die Kunststoffrohraussenmantelfläche bzw. das Kunststoffrohr und Sender und Empfänger zueinander rotierbar bzw. drehbar angeordnet sind.

Die erfindungsgemässe Vorrichtung zur zerstörungsfreien Prüfung eines Kunststoffrohres vorzugsweise aus PP oder PVDF sowie auch der Schweissnaht des Kunststoffrohres beinhaltet einen Sender zur Erzeugung von Ultraschallwellen. Die Ultraschallwellen werden in das Prüfobjekt, hier das Kunststoffrohr oder auch die Schweissnaht eingestrahlt. Als Koppelmittel zwischen Sender bzw. Empfänger und Kunststoffrohraussenmantel wird erfindungsgemäss Luft eingesetzt, dies ermöglicht eine einfache und kontaminationsfreie Anwendung des Prüfverfahrens der Kunststoffrohre und der Schweissnaht.
Der Sender ist zur Kunststoffaussenmantelfläche bzw. zur Achse des Kunststoffrohres geneigt angeordnet. Dieser Einschallwinkel ist entsprechend dem Material und der Kunststoffrohrgeometrie zu wählen.

Die erfindungsgemässe Vorrichtung beinhaltet ebenso einen Empfänger, der die Ultraschallwellen des Senders empfängt, die anschliessend entsprechend aufbereitet und ausgewertet werden. Der Einschallwinkel des Empfängers ist gegengleich dem des Senders ausgerichtet um die Ultraschallwellen zu empfangen welche sich über das Kunststoffrohr bzw. die Aussenmantelfläche und in der Wandung ausbreiten.

In der Rohrwand werden vorzugsweise Lambwellen als Ultraschallwellen eingesetzt, wobei auch andere Ultraschallwellen vorstellbar sind.

Um die vom Sender eingestrahlten und vom Empfänger empfangenen Ultraschallwellen in ein digitales Signal aufzubereiten, weist die erfindungsgemässe Vorrichtung einen Vorverstärker, einen Verstärker und einen Bandpass-Filter auf. Zudem wird durch einen Analog-Digital-Wandler das Signal digitalisiert um anschliessend ausgewertet werden zu können.

Das zu prüfende Kunststoffrohr wird auf einem Lagerelement gelagert und positioniert. Als Lagerelement ist vorzugsweise ein Lagerbock mit Rollen, auf denen das Kunststoffrohr aufliegen kann, vorzusehen, wobei auch andere Lagerelemente vorstellbar sind.

Um den kompletten Umfang des Kunststoffrohres oder der Schweissnaht zu prüfen ist es notwendig, dass die Kunststoffrohraussenmantelfläche und Sender und Empfänger zueinander rotierbar bzw. drehbar angeordnet sind, wobei die Rotation um die Achse des Kunststoffrohres erfolgt. In erster Linie spielt es keine Rolle ob sich das Kunststoffrohr um seine Achse dreht und Sender und Empfänger still stehen oder ob Sender und Empfänger sich um das zu prüfende Kunststoffrohr drehen. Es ist vielmehr die Variante zu bevorzugen, die eine bessere Signalerkennung bzw. Fehlererkennung durch die Vermeidung von Störsignalen ermöglicht.

Durch die Materialien und die Schweissnähte, die mit der vorliegenden Erfindung zu prüfen sind, besteht die Schwierigkeit der Signalauswertung aufgrund der hohen akustischen Dämpfung der zu prüfenden Materialien wie PP und PVDF sowie der unregelmässigen Materialansammlung bei einer zu prüfenden Schweissnaht.

Ein Fehler im Material bzw. in der Schweissnaht wird in der Signalauswertung bspw. durch einen Ausschlag in der Messkurve erkannt, wobei ein Ausschlag in der Messkurve bspw. durch eine Materialveränderung bzw. einen Materialübergang wie bspw. durch einen Lufteinschluss entstehen kann, der durch die Ultraschallwelle erfasst wird bzw. die Ultraschallwelle sich nicht mehr gleich ausbreitet. Da das zu prüfende Objekt aber eine eher schlechte Schallleitfähigkeit aufweist, sowie die Schweissnähte noch eine starke Materialunregelmässigkeit aufweisen, ist es von grossem Vorteil möglichst viele Störfaktoren während des Prüfvorgangs zu eliminieren und einen möglichst konstanten und gleichmässigen Prüfvorgang zu erreichen.

Um möglichst nur das ausschlaggebende Signal zu erhalten, ist es von Vorteil, wenn zwischen Sender und Empfänger ein Schallblocker angeordnet ist. Dieser dient der Vermeidung der direkten Übertragung der Ultraschallwellen vom Sender zum Empfänger, welche das eigentliche Signal zur Fehlerermittlung durch die Ultraschallwellen, welche durch das zu prüfende Objekt geleitet werden, stören bzw. verunreinigen würden und der Fehler im Kunststoffrohr oder der Schweissnaht nicht klar und eindeutig erkennbar wäre.

Um die Ultraschallwellen und das daraus auszuwertende Signal möglichst konstant zu halten wenn keine Fehler vorliegen, ist es von Vorteil wenn Sender und auch Empfänger zur Kunststoffrohraussenmantelfläche bzw. Schweissnaht hin immer denselben Abstand aufweisen. Da die Kunststoffrohre meist unrund sind, ist der Abstand entsprechend bei der Rotation des Kunststoffrohres oder des Senders und Empfängers auszugleichen. Dazu dient ein Abstandsmesser, welcher den Abstand vom Sender und Empfänger zur Kunststoffaussenmantelfläche misst.

Vorzugsweise ist der Schallblocker und/oder der Abstandsmesser drehbar bzw. rotierbar um das Kunststoffrohr angeordnet, entsprechend dem Sender und Empfänger. Wie beim Sender und Empfänger ist neben der Vermeidung von Störsignalen auch die Dimension der zu prüfenden Kunststoffrohre bzw. dessen Schweissnähte massschlaggebend was drehbar bzw. rotierbar ist, das heisst, ob das zu prüfende Bauteil oder Sender und Empfänger und auch Schallblocker und/oder Abstandsmesser drehen.

Verstellmittel passen den durch den Abstandsmesser ermittelten Wert zwischen Sender und Empfänger zur Kunststoffrohraussenmantelfläche entsprechend an, so dass immer derselbe Abstand besteht, wodurch unerwünschte Signalstörungen vermieden werden können.

Vorzugsweise wird als Abstandsmesser ein Sensor zur Distanzerkennung eingesetzt. Vorteilhaft ist es, wenn ein optischer Sensor dazu verwendet wird, wobei auch andere Distanzmesssysteme denkbar sind.

Es hat sich gezeigt, dass es von Vorteil ist, wenn die eingesetzten Ultraschallwellen, vorzugsweise Lambwellen, in einem Frequenzbereich von 50-400kHz liegen.

Das erfindungsgemässe Verfahren zur zerstörungsfreien Prüfung eines Kunststoffrohres, vorzugsweise einer Schweissnaht eines Kunststoffrohres, umfasst folgende Schritte:
Einstrahlen von Ultraschallwellen in die Kunststoffrohraussenmantelfläche, wobei die Einstrahlung über den Sender erfolgt, der vorzugsweise in einem Einschallwinkel zur Kunststoffrohraussenmantelfläche bzw. zur Achse des Kunststoffrohres angeordnet ist.

Ausbreitung der Ultraschallwellen als Lambwellen in der Rohrwand durch die Schweissnaht.
Empfangen der Ultraschallwellen, wobei das Empfangen durch den Empfänger erfolgt der vorzugsweise in einem Einschallwinkel zur Kunststoffrohraussenmantelfläche bzw. zur Achse des Kunststoffrohres angeordnet ist, wobei sich die Kunststoffrohraussenmantelfläche und Sender und Empfänger während des Einstrahlens und Empfangens der Ultraschallwellen kontinuierlich oder durch eine stop and go Bewegung zueinander drehen, dies ermöglicht eine Überprüfung entlang des kompletten Umfangs des Kunststoffrohres bzw. der Schweissnaht.

Um ein möglichst klares und einheitliches Signal zu generieren ist es von Vorteil wenn möglichst wenig Störungen und Veränderungen bei der Prüfung erfolgen, deshalb ist es zu bevorzugen, wenn während des Einstrahlens und Empfangens der Ultraschallwellen der Abstand zwischen Kunststoffrohraussenmantelfläche und Sender und Empfänger kontinuierlich ausgemessen, nachjustiert und dadurch gleich beibehalten wird.

Ein Ausführungsbeispiel der Erfindung wird anhand der Figuren beschrieben, wobei sich die Erfindung nicht nur auf das Ausführungsbeispiel beschränkt. Es zeigen:

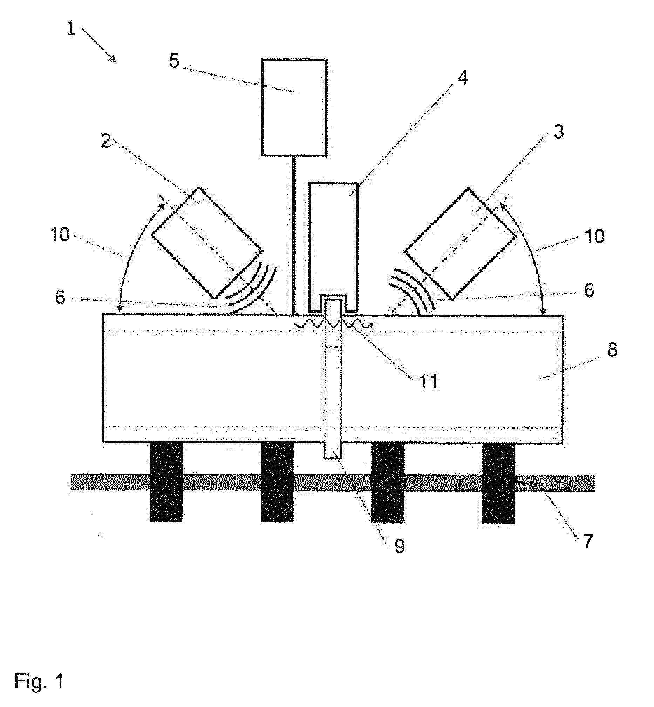

- Fig. 1: eine schematische Darstellung einer erfindungsgemässen Vorrichtung.

Die in Fig. 1 dargestellte Zeichnung zeigt eine schematische Darstellung einer erfindungsgemässen Vorrichtung 1. Die Vorrichtung 1 weist einen Sender 2 auf der das zu prüfende Kunststoffrohr vorzugsweise aus PP oder PVDF mit Ultraschallwellen 6 einschallt. Die Ultraschallwellen breiten sich als Lambwellen 11 entlang bzw. in der Kunststoffrohrwandung des zu überprüfenden Kunststoffrohres 8 in Richtung Empfänger 3 aus. Der Empfänger 3 erfasst die Ultraschallwellen 6 die anschliessend zum Signal aufbereitet werden. Die Lambwellen 11 breiten sich in der Wandung des Kunststoffrohres 8 aus und ebenso in der Schweissnaht 9.
Ein Schallblocker 4 soll verhindern, dass Ultraschallwellen 6 direkt vom Sender 2 zum Empfänger 3 gelangen. Um wie zuvor bereits beschrieben ein möglichst optimales und eindeutiges Signal zu erhalten ist es von Vorteil, wenn Sender 2 und Empfänger 3 während des kompletten Prüfvorgangs denselben Abstand zur Kunststoffrohraussenmantelfläche haben. Dies wird dadurch erreicht, dass ein Abstandsmesser 5 während des Prüfvorgangs den Abstand zur Kunststoffrohraussenmantelfläche misst und eine Verstelleinheit (nicht dargestellt) den Abstand entsprechend nachjustiert. In Fig. 1 ist das Kunststoffrohr 8 auf einem Lagerelement 7 gelagert, wobei in der abgebildeten Ausführungsform ein Rollenbock dargestellt ist. In dieser Ausführungsform dreht sich das zu prüfende Kunststoffrohr 8 um die Überprüfung entlang des kompletten Umfangs durchzuführen. Selbstverständlich sind auch andere Lagerelemente vorstellbar. Wie schon erwähnt ist auch eine erfindungsgemässe Vorrichtung ausführbar bei der sich Sender 2 und Empfänger 3 um ein stehendes zu überprüfendes Kunststoffrohr drehen.

### Bezugszeichenliste

- 1: Vorrichtung
- 2: Sender
- 3: Empfänger
- 4: Schallblocker
- 5: Abstandsmesser
- 6: Ultraschallwellen in Luft
- 7: Lagerelement
- 8: Kunststoffrohr
- 9: Schweissnaht
- 10: Einschallwinkel
- 11: Lambwellen

## Patentansprüche

1. Vorrichtung (1) zur zerstörungsfreien Prüfung eines Kunststoffrohres (8) vorzugsweise einer Schweissnaht (9) eines Kunststoffrohres (8) beinhaltet einen Sender (2) zur Erzeugung von Ultraschallwellen, einen Empfänger (3) zum Empfangen der Ultraschallwellen, einen Vorverstärker, einen Verstärker und einen Bandpass-Filter zur Signalaufbereitung, einen Analog-Digital Wandler zur Signaldigitalisierung, und ein Lagerungselement (7) zur Lagerung und Positionierung des zu prüfenden Kunststoffrohres (8) bzw. Schweissnaht (9), wobei als Koppelmedium zwischen Sender (2) und zu prüfendem Werkstück und Empfänger (8) Luft dient, **dadurch gekennzeichnet, dass** die Kunststoffrohraussenmantelfläche bzw. das Kunststoffrohr (8) und Sender (2) und Empfänger (3) zueinander rotierbar bzw. drehbar angeordnet sind.

2. Vorrichtung (1) nach Anspruch 1, **dadurch gekennzeichnet, dass** Sender (2) und Empfänger (3) drehbar bzw. rotierbar um das Kunststoffrohr (8) angeordnet sind.

3. Vorrichtung (1) nach einem der Ansprüche 1 oder 2, **dadurch gekennzeichnet, dass** das Kunststoffrohr (8) rotierbar um seine Achse gelagert ist.

4. Vorrichtung (1) nach einem der Ansprüche 1 bis 3, **dadurch gekennzeichnet, dass** zwischen dem Sender (2) und dem Empfänger (3) zur Vermeidung der direkten Übertragung von Ultraschallwellen vom Sender (2) zum Empfänger (3) ein Schallblocker (4) angeordnet ist.

5. Vorrichtung (1) nach einem der Ansprüche 1 bis 4, **dadurch gekennzeichnet, dass** die Vorrichtung (1) einen Abstandsmesser (5) aufweist, wobei der Abstandsmesser (5) den Abstand zur Kunststoffrohraussenmantelfläche misst.

6. Vorrichtung (1) nach einem der Ansprüche 4 oder 5, **dadurch gekennzeichnet dass** der Schallblocker (4) und/oder der Abstandsmesser (5) drehbar bzw. rotierbar um das Kunststoffrohr (8) angeordnet sind.

7. Vorrichtung (1) nach Anspruch 6, **dadurch gekennzeichnet, dass** die Vorrichtung Verstellmittel aufweist, wobei die Verstellmittel aufgrund der ermittelten Werte des Abstandsmessers (5) den Abstand zwischen Sender (2) bzw. Empfänger (3) und Kunststoffrohraussenmantelfläche nachjustieren und den Abstand konstant gleich halten.

8. Vorrichtung (1) nach Anspruch 5 oder 6, **dadurch gekennzeichnet, dass** der Abstandsmesser (5) als Sensor (2) zur Distanzerkennung, vorzugsweise als optischer Sensor ausgebildet ist.

9. Vorrichtung (1) nach einem der Ansprüche 1 bis 8, **dadurch gekennzeichnet, dass** die erzeugten Ultraschallwellen (6) im Frequenzbereich von 50-400 kHz liegen.

10. Vorrichtung (1) nach einem der Ansprüche 1 bis 9, **dadurch gekennzeichnet dass** Sender (2) und Empfänger (3) in einem Einschallwinkel (10) zur Mittelachse des Kunststoffrohres (8) angeordnet sind, wobei der Einschallwinkel (10) vorzugsweise verstellbar bzw. veränderbar ist.

11. Verfahren zur zerstörungsfreien Prüfung eines Kunststoffrohres vorzugsweise einer Schweissnaht eines Kunststoffrohres, wobei das Verfahren folgende Schritte umfasst:
Einstrahlen von Ultraschallwellen in die Kunststoffrohraussenmantelfläche, Ausbreitung der Ultraschallwellen als Lambwellen in der Rohrwand durch die Schweissnaht.
Empfangen der Ultraschallwellen, **dadurch gekennzeichnet, dass** sich die Kunststoffohraussenmantelfläche und Sender und Empfänger während des Einstrahlens und Empfangens der Ultraschallwellen kontinuierlich oder durch eine stop and go Bewegung zueinander drehen.

12. Verfahren nach Anspruch 11, **dadurch gekennzeichnet, dass** während des Einstrahlens und Empfangens der Ultraschallwellen der Abstand zwischen Kunststoffrohraussenmantelfläche und Sender und Empfänger kontinuierlich ausgemessen, nachjustiert und dadurch gleich beibehalten wird.
